# EUROPEAN PATENT APPLICATION

(11) **EP 4 485 340 A1**
(43) Date of publication of application: **01.01.2025**
(21) Application number: 23855074.3
(22) Date of filing: 28.07.2023
(51) Int. Cl.: G06Q 50/10, G06Q 50/20, G06Q 10/083

(54) **ELECTRONIC DEVICE AND CONTROL METHOD THEREFOR**

(30) Priority: 16.08.2022 KR 20220102054
(71) Applicant: Samsung Electronics Co., Ltd., Suwon-si, Gyeonggi-do 16677 (KR)
(72) Inventor: HAN, Najeong, Suwon-si Gyeonggi-do 16677 (KR); KIM, Sanga, Suwon-si Gyeonggi-do 16677 (KR); KIM, Yongjun, Suwon-si Gyeonggi-do 16677 (KR); CHO, Namjin, Suwon-si Gyeonggi-do 16677 (KR); CHO, Woogyung, Suwon-si Gyeonggi-do 16677 (KR)
(74) Representative: Gulde & Partner
(86) International application number: PCT/KR2023/011070
(87) International publication number: WO 2024/039104

(57) **Abstract**

An electronic apparatus includes: a communication interface configured to perform a communication connection with an external device; a memory storing instructions; and a processor connected to the memory and configured to execute the instructions. The at least one instruction includes instructions to: receive a signal requesting a first cooking operation of a first cooking device for cooking food from a user terminal device while a food cooking image is provided to the user terminal device, in response to receiving the signal requesting the first cooking operation, identify whether a user has the first cooking device based on a list of cooking devices that the user has, and in response to identifying that the user does not have the first cooking device, transmit to the external device a signal for performing a second cooking operation that is capable of replacing the first cooking operation of the first cooking device.

## Description

### [Technical Field]

Apparatuses and methods relate to an electronic apparatus and a controlling method thereof, and more particularly, to an electronic apparatus which may provide control and cooking methods of cooking devices during a cooking class using a video call, and a controlling method thereof.

### [Background Art]

As network and data processing technologies are developed in transmitting and sharing data online, technologies for transmitting and receiving image, audio, and other shared data in real time in two ways and sharing the same have been developed.

Real-time video call and chatting service based on web real-time communication (WebRTC) may be referred to as a representative example of real-time two-way data communication. The image and audio data may be shared among chat participants by a peer-to-peer connection between the chat participants' devices using a WebRTC technology standard.

The WebRTC technology standard may be used in a field that requires two-way image or audio data sharing in real time, such as an online class.

Unlike an offline class, the online class may be conducted in such a way that an instructor and a participant share information and data online only through the image and the audio while the instructor and the participant are far away from each other. It is thus difficult to provide appropriate guidance for an unexpected situation requiring direct intervention of the instructor or based on a personal situation of the participant during the class.

For the unexpected situation or the personalized guidance, it is desirable to provide a solution, such as the instructor remotely presenting a solution, and a remote device-control technology may here be utilized.

The remote device-control technology may collectively refer to technologies for controlling a plurality of electronic devices. The remote device-control technology may be used in various control systems such as a smart home, a smart production line, and a smart shop, in which direct and continuous human intervention is minimized.

It is desirable to find a way to provide an appropriate solution in case that the unexpected situation or the personalized guidance is needed during the online class by grafting the remote device-control technology to the online class conducted based on the real-time two-way communication such as the above-mentioned WebRTC technology standard.

### [Disclosure]

### [Technical Solution]

An electronic apparatus may include: a communication interface configured to perform a communication connection with an external device; a memory storing at least one instruction; and at least one processor connected to the memory and configured to execute the at least one instruction.

The at least one instruction may include instructions to: receive a signal requesting a first cooking operation of a first cooking device for cooking food from a user terminal device while a food cooking image is provided to the user terminal device, in response to receiving the signal requesting the first cooking operation, identify whether a user has the first cooking device based on a list of cooking devices that the user has, and in response to identifying that the user does not have the first cooking device, transmit to the external device a signal for performing a second cooking operation that is capable of replacing the first cooking operation of the first cooking device.

The at least one instruction may further include instructions to, in response to identifying that the user does have the first cooking device, transmit to the first cooking device a control instruction for controlling the first cooking device.

The at least one instruction may further include instructions to, in response to identifying that the user does not have the first cooking device, transmit to the user terminal device cooking information on a method of cooking food without using the first cooking device.

The at least one instruction may further include to: in response to identifying that the user does not have the first cooking device, attempt to obtain information on a second cooking device capable of performing the second cooking operation that is capable of replacing the first cooking operation of the first cooking device based on information on the first cooking device and information on the first cooking operation, in response to obtaining the information on the second cooking device, identify whether the user has the second cooking device based on the list of cooking devices that the user has, and in response to identifying that the user does have the second cooking device, transmit to the second cooking device a control instruction for controlling the second cooking device.

The at least one instruction may further include instructions to: in response to identifying that the user does not have the first cooking device, obtain information on a second cooking device capable of performing the second cooking operation that is capable of replacing the first cooking operation of the first cooking device based on information on the first cooking device and information on the first cooking operation, in response to obtaining the information on the second cooking device, identify whether the user has the second cooking device based on the list of cooking devices that the user has, in response to identifying that the user does have the second cooking device, receive a user input on whether to control the second cooking device, and in response to receiving the user input to control the second cooking device, transmit to the second cooking device a control instruction for controlling the second cooking device.

The at least one instruction may further include instructions to transmit the information on the second cooking device and information on the second cooking operation to the user terminal device to provide the information on the second cooking device and the information on the second cooking operation to the user.

The at least one instruction may further include instructions to, in response to (i) identifying that the user does not have the second cooking device or (ii) failing to obtain the information on the second cooking device, transmit to the user terminal device cooking information on a method of cooking food without using the first cooking device.

The at least one instruction may further include instructions to: receive a request for the food cooking image from the user terminal device, and in response to receiving the request for the food cooking image, transmit data for the food cooking image to the user terminal device to provide the food cooking image to the user.

The food cooking image may be provided through a video call between a plurality of users that includes the user. The food cooking image may include at least one cooking stage for cooking food and information on a cooking device for each of the at least one cooking stage.

A controlling method of an electronic apparatus may include: receiving a signal requesting a first cooking operation of a first cooking device for cooking food from a user terminal device while a food cooking image is provided to the user terminal device; in response to receiving the signal requesting the first cooking operation, identifying whether a user has the first cooking device based on a list of cooking devices that the user has; and in response to identifying that the user does not have the first cooking device, transmitting to an external device a signal for performing a second cooking operation that is capable of replacing the first cooking operation of the first cooking device.

The transmitting the signal may include, in response to identifying that the user does have the first cooking device, transmitting to the first cooking a control instruction for controlling the first cooking device.

The transmitting the signal may include, in response to identifying that the user does not have the first cooking device, transmitting to the user terminal device cooking information on a method of cooking food without using the first cooking device.

The transmitting the signal may include: in response to identifying that the user does not have the first cooking device, attempting to obtain information on a second cooking device capable of performing the second cooking operation that is capable of replacing the first cooking operation of the first cooking device based on information on the first cooking device and information on the first cooking operation; in response to obtaining the information on the second cooking device, identifying whether the user has the second cooking device based on the list of cooking devices that the user has; and in response to identifying that the user does have the second cooking device, transmitting to the second cooking device a control instruction for controlling the second cooking device to the second cooking device.

The transmitting the signal may include: in response to identifying that the user does not have the first cooking device, attempting to obtain information on a second cooking device capable of performing the second cooking operation that is capable of replacing the first cooking operation of the first cooking device based on information on the first cooking device and information on the first cooking operation; in response to obtaining the information on the second cooking device, identifying whether the user has the second cooking device based on the list of cooking devices that the user has; in response to identifying that the user does have the second cooking device, receiving a user input on whether to control the second cooking device; and in response to receiving the user input to control the second cooking device, transmitting to the second cooking device a control instruction for controlling the second cooking device.

The method may further include transmitting the information on the second cooking device and information on the second cooking operation to the user terminal device to provide the information on the second cooking device and the information on the second cooking operation to the user.

The method may further include, in response to (i) identifying that the user does not have the second cooking device or (ii) failing to obtain the information on the second cooking device, transmitting to the user terminal device cooking information on a method of cooking food without using the first cooking device.

The method may further include: receiving a request for the food cooking image from the user terminal device, and in response to receiving the request for the food cooking image, transmitting data for the food cooking image to the user terminal device to provide the food cooking image to the user.

The food cooking image may be provided through a video call between a plurality of users that includes the user. The food cooking image may include at least one cooking stage for cooking food and information on a cooking device for each of the at least one cooking stage.

A non-transitory computer-readable recording medium may beconfigured to store at least one computer instruction configured to be executed by at least one processor of an electronic apparatus for allowing the electronic apparatus to perform an operation. The operation may include: receiving a signal requesting a first cooking operation of a first cooking device for cooking food from a user terminal device while a food cooking image is provided to the user terminal device; in response to receiving the signal requesting the first cooking operation, identifying whether a user has the first cooking device based on a list of cooking devices that the user has; and in response to identifying that the user does not have the first cooking device, transmitting to an external device a signal for performing a second cooking operation that is capable of replacing the first cooking operation of the first cooking device.

The transmitting the signal may include: in response to identifying that the user does not have the first cooking device, attempting to obtain information on a second cooking device capable of performing the second cooking operation that is capable of replacing the first cooking operation of the first cooking device based on information on the first cooking device and information on the first cooking operation; in response to obtaining the information on the second cooking device, identifying whether the user has the second cooking device based on the list of cooking devices that the user has; and in response to identifying that the user does have the second cooking device, transmitting to the second cooking device a control instruction for controlling the second cooking device to the second cooking device.

### [Description of Drawings]

Aspects, features and advantages of specific embodiments of the disclosure will be more apparent through the following description provided with reference to the accompanying drawings.
FIG. 1 is a view for explaining a system providing an online cooking class through video call and remote device-control technology according to one or more embodiments of the disclosure.
FIG. 2 is a block diagram for explaining a configuration of an electronic apparatus according to one or more embodiments of the disclosure.
FIG. 3A is a sequence diagram for explaining an operation of an electronic apparatus identifying whether a user has a cooking device according to other embodiments of the disclosure.
FIG. 3B is a sequence diagram for explaining the operation of identifying whether the user has the cooking device in case that a user terminal device may directly access a SmartThings server according to other embodiments of the disclosure.
FIG. 4A is a sequence diagram for explaining a process in which a cooking operation is performed by the electronic apparatus identifying whether the user has the cooking device and then transmitting an instruction for controlling the cooking device to the cooking device according to other embodiments of the disclosure.
FIG. 4B is a sequence diagram for explaining a process in which a cooking operation is performed by the electronic apparatus identifying whether the user has a cooking device and then transmitting the instruction for controlling the cooking device to the cooking device according to other embodiments of the disclosure.
FIG. 4C is a sequence diagram for explaining an operation of the electronic apparatus transmitting and displaying cooking information to the user terminal device according to other embodiments of the disclosure.
FIG. 4D is a sequence diagram for explaining an operation of the electronic apparatus transmitting and displaying cooking information to the user terminal device according to other embodiments of the disclosure.
FIG. 5A is a view for explaining a screen of the online cooking class conducted through the video call that uses the user terminal device according to other embodiments of the disclosure.
FIG. 5B is a view for explaining a user interface (UI) for controlling the cooking device displayed on a screen of the user terminal device according to other embodiments of the disclosure.
FIG. 5C is a view for explaining a UI for controlling the cooking device displayed on the screen of the user terminal device according to other embodiments of the disclosure.
FIG. 5D is a view for explaining a UI for providing the cooking information displayed on the screen of the user terminal device according to other embodiments of the disclosure.
FIG. 6 is a sequence diagram for explaining an operation of the electronic apparatus storing the image and audio data of the video call for the cooking class according to other embodiments of the disclosure.
FIGS. 7A is sequence diagrams for explaining a process in which the electronic apparatus identifies whether the user has the cooking device in a process of replaying the cooking class based on the stored image and audio data of the video call according to other embodiments of the disclosure.
FIGS. 7B is sequence diagrams for explaining a process in which the electronic apparatus identifies whether the user has the cooking device in a process of replaying the cooking class based on the stored image and audio data of the video call according to other embodiments of the disclosure.
FIG. 8 is a flowchart for explaining an operation of the electronic apparatus according to other embodiments of the disclosure.

### [Mode for Invention]

The disclosed embodiments may be variously modified, and specific embodiments are thus shown in the drawings and described in detail in the detailed description. However, it is to be understood that the scope of the disclosed embodiments are not limited to the specific embodiments, and includes various modifications, equivalents, or alternatives according to the embodiments. Throughout the accompanying drawings, similar components are denoted by similar reference numerals.

The description omits a detailed description of a case where the detailed description for the known functions or configurations is determined to unnecessarily obscure the gist.

In addition, the following embodiments may be modified in various different forms, and the scope and spirit of the disclosed embodiments are not limited to the following embodiments. Rather, these embodiments are provided to be thorough and complete, and to completely transfer the spirit of the disclosed embodiments to those skilled in the art.

Terms used are used only to describe the specific embodiments rather than limiting the scope. A term of a singular number may include its plural number unless explicitly indicated otherwise in the context.

An expression "have," "may have," "include," "may include" or the like, indicates existence of a corresponding feature (for example, a numerical value, a function, an operation or a component such as a part), and does not exclude existence of an additional feature.

Expressions "A or B," "least one of A and/or B," "one or more of A and/or B" and the like, may include all possible combinations of items enumerated together. For example, "A or B," "at least one of A and B" or "at least one of A or B" may indicate all of 1) a case where at least one A is included, 2) a case where at least one B is included, or 3) a case where both of at least one A and at least one B are included.

Expressions "first," "second" and the like, used may indicate various components regardless of a sequence or importance of the components. These expressions are used only to distinguish one component from the other components, and do not limit the corresponding components.

In case that any component (for example, a first component) is mentioned to be "(operatively or communicatively) coupled with/to" or "connected to" another component (for example, a second component), it is to be understood that any component may be directly coupled to another component or may be coupled to another component through still another component (for example, a third component).

On the other hand, in case that any component (for example, a first component) is mentioned as being "directly coupled" or "directly connected" to another component (for example, a second component), it is to be understood that still other component (for example, a third component) does not exist between any component and another component.

An expression "configured (or set) to" may be replaced by an expression "suitable for," "having the capacity to," "designed to," "adapted to," "made to" or "capable of" based on a situation. The expression "configured (or set) to" may not necessarily indicate "specifically designed to" in hardware.

Instead, an expression a device "configured to" in any situation may indicate that the device may "perform-" together with another device or component. For example, "a processor configured (or set) to perform A, B and C" may indicate a dedicated processor (for example, an embedded processor) for performing the corresponding operations or a generic-purpose processor (for example, a central processing unit (CPU) or an application processor) that may perform the corresponding operations by executing one or more software programs stored in a memory apparatus.

In the embodiments, a "module" or a "-er/or" may perform at least one function or operation, and be implemented by hardware or software, or be implemented by a combination of hardware and software. In addition, a plurality of "modules" or a plurality of "~ers/ors" may be integrated with each other in at least one module and implemented by at least one processor except for a "module" or an "~er/or" that needs to be implemented in specific hardware.

Various elements and regions in the drawings are schematically shown. Therefore, the spirit of the disclosed embodiments are not limited by relative sizes or intervals shown in the accompanying drawings.

Hereinafter, the embodiments are described in detail with reference to the accompanying drawings for those skilled in the art to which the disclosed embodiments pertain to easily practice the disclosed embodiments.

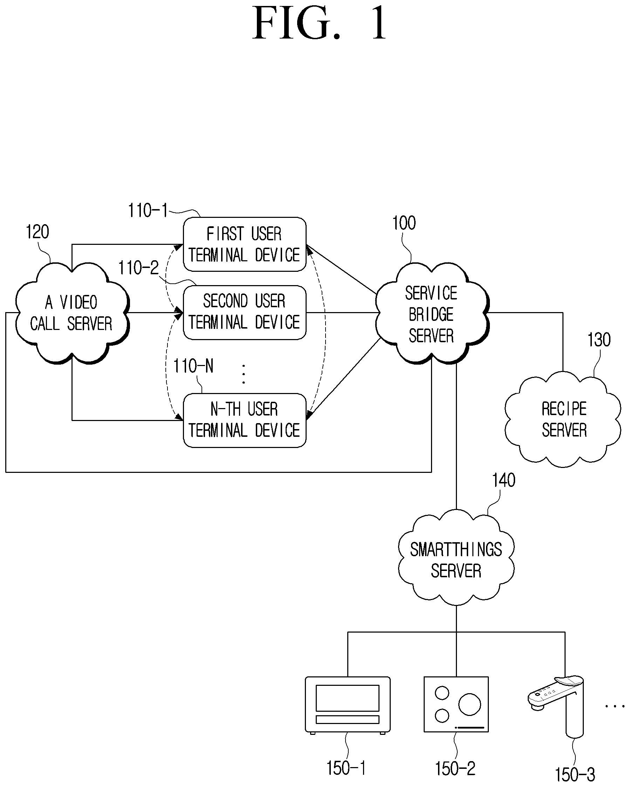

FIG. 1 is a view for explaining a system providing an online cooking class through video call and remote device-control technology according to one or more embodiments of the disclosure.

Referring to FIG. 1, an electronic apparatus 200 may be a service bridge server 100.

The service bridge server 100 (or referred to as a "first server") may serve as a bridge to transmit/receive data by connecting the following various servers and a plurality of user terminal devices with each other: a video call server 120 (or referred to as a "second server") managing the video calls between the plurality of user terminal devices, a recipe server 130 (or referred to as a "third server") providing information on food cooking; and a SmartThings server 140 (or referred to as a "fourth server") connecting and controlling one or more cooking devices.

That is, the service bridge server 100 may receive the image and audio data from one or more servers or the plurality of user terminal devices, and transmit various data request signals, and/or device control instructions, to one or more servers. However, the service bridge server 100 is not limited thereto, and may be implemented as an integrated server device including the servers such as the recipe server 130 and the SmartThings server 140.

In detail, in the system providing the online cooking class using the video call that includes the service bridge server 100, the plurality of user terminal devices may perform the video call for transmitting/receiving the image and audio data to each other by using a peer-to-peer connection or the video call server 120.

The service bridge server 100 may be wired/wireless connected to the plurality of user terminal devices and the video call server 120 performing the video call, and receive the image data, the audio data, and a signal requesting control of the cooking device input by a user through the user terminal device during the video call.

In case of receiving the signal requesting the control of the cooking device during the video call, the service bridge server 100 may request a user device list from the SmartThings server 140 to check whether the user has the cooking device.

The service bridge server 100 may receive information on the user device list from the SmartThings server 140 and identify whether the user has the cooking device. In case that the user has the cooking device, the service bridge server 100 may transmit a signal for controlling the cooking operation of the cooking device to the SmartThings server 140. In case that the user does not have the corresponding cooking device, the service bridge server 100 may transmit a signal for controlling a cooking operation of another cooking device to the SmartThings server 140. In case that the user is identified as not having the corresponding cooking device, the service bridge server 100 may receive information on a cooking method which may replace the cooking device from the recipe server 130 to thus transmit the information to the user terminal device, and the user terminal device may display the information on the cooking method on a screen.

In case of receiving an operation for controlling the cooking operation of the cooking device from the service bridge server 100, the SmartThings server 140 may transmit a signal for controlling the cooking device to the cooking device for the cooking device to perform the cooking operation.

As described above, the service bridge server 100 may serve to entirely control the system providing the online cooking class through the video call and the remote device-control technology.

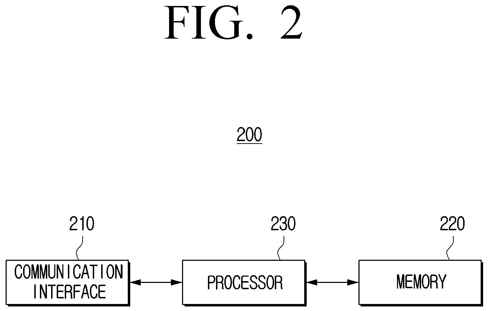

FIG. 2 is a block diagram for explaining a configuration of the electronic apparatus 200 according to one or more embodiments of the disclosure. The electronic apparatus 200 may be the electronic apparatus 200 serving as the service bridge server 100 described with reference to FIG. 1.

The electronic apparatus 200 is not limited to a server device, and may be any of various electronic apparatuses 200 transmitting/receiving data by performing a communication connection with another electronic apparatus 200 through a communication interface 210, processing the data, and including a memory 220 which may store the received or processed data.

Referring to FIG. 2, the electronic apparatus 200 may include the communication device 210, the memory 220, and a processor 230.

The communication interface 210 may include a wireless communication interface, a wired communication interface, or an input interface. The wireless communication interface may perform communication with various external devices by using wireless communication technology or mobile communication technology. The wireless communication technology may include, for example, Bluetooth, Bluetooth low energy, controller area network (CAN) communication, wireless-fidelity (Wi-Fi), Wi-Fi direct, ultra-wide band communication (UWB), Zigbee, infrared data association (IrDA), or near field communication (NFC) and the mobile communication technology may include 3rd generation partnership project (3GPP), worldwide interoperability for microwave access (Wi-Max), long term evolution (LTE), and/or 5th generation (5G). The wireless communication interface may be implemented using an antenna, a communication chip, and/or a substrate, which may transmit an electromagnetic wave to the outside or receive the electromagnetic wave transmitted from the outside.

The wired communication interface may perform the communication with various external devices based on a wired communication network. The wired communication network may be implemented using a physical cable such as a pair cable, a coaxial cable, an optical fiber cable, or an Ethernet cable.

Either one of the wireless communication interface and the wired communication interface may be omitted in some embodiments. Accordingly, the electronic apparatus 200 may include only the wireless communication interface or only the wired communication interface. In addition, the electronic apparatus 200 may have an integrated communication interface supporting both wireless access through the wireless communication interface and wired connection through the wired communication interface.

The electronic apparatus 200 is not limited to including one communication interface 210 performing one type of communication connection, and may include the plurality of communication interfaces 210.

The processor 230 may perform the communication connection with an external server such as the video call server 120, the recipe server 130, or the SmartThings server 140 or the external device through the communication interface 210 to thus transmit or receive the image data, the audio data, and other shared data.

The memory 220 may temporarily or non-temporarily store various programs or data, and transfer the stored information to the processor 230 based on a call of the processor 230. In addition, the memory 220 may store various types of information required for the operation, processing, or control of the processor 230 in an electronic format.

The memory 220 may include, for example, at least one of a main memory device or an auxiliary memory device. The main memory device may be implemented using a semiconductor storage medium such as a read only memory (ROM) or a random access memory (RAM). The ROM may include, for example, a conventional ROM, an erasable and programmable ROM (EPROM), an electrically erasable and a programmable ROM (EEPROM), or a mask ROM. The RAM may include, for example, a dynamic RAM (DRAM) or a static RAM (SRAM). The auxiliary memory device may be implemented using at least one storage medium which may permanently or semi-permanently store data, such as an optical media including a flash memory 200, a secure digital (SD) card, a solid state drive (SSD), a hard disk drives (HDD), a magnetic drum, a compact disc (CD), a digital versatile disc (DVD) or a laser disc, a magnetic tape, a magneto-optical disk, or a floppy disk.

The memory 220 may store the image data, the audio data, and the shared data received from the external server or the external device. The shared data stored in the memory 220 may be, for example, information on the food cooking method, information on the cooking device, information on the cooking operation of the cooking device, and information on an instruction for controlling the cooking device.

The processor 230 may control an overall operation of the electronic apparatus 200. In detail, the processor 230 may be connected to the components of the electronic device 200 including the memory 220 as described above, and control the overall operation of the electronic device 200 by executing at least one instruction stored in the memory 120 as described above. In particular, the processor 230 may be implemented as one processor 230 or as the plurality of processors 230.

The processor 230 may be implemented in various ways. For example, the processor 230 may be implemented as at least one of an application specific integrated circuit (ASIC), an embedded processor 230, a microprocessor 230, a hardware control logic, a hardware finite state machine (FSM) or a digital signal processor (DSP) 230.

However, the processor 230 may include one or more of a central processing unit (CPU), a micro controller unit (MCU), a micro processing unit (MPU), a controller, an application processor (AP) 230, a communication processor (CP) 230 or an advanced RISC machine (ARM) processor 230, or may be defined by these terms. In addition, the processor 230 may be implemented in a system-on-chip (SoC) or a large scale integration (LSI), in which a processing algorithm is embedded, or may be implemented in the form of a field programmable gate array (FPGA). In addition, the processor 230 may perform various functions by executing computer executable instructions stored in the memory 220. In addition, the processor 230 may include at least one of a graphics-processing unit (GPU), a neural processing unit (NPU), or a visual processing unit (VPU), which is a separate artificial intelligence (AI) dedicated processor 230, to perform artificial intelligence functions.

While the food cooking image is provided to the user terminal device through the communication interface 210, the processor 230 may receive a signal requesting a first cooking operation of the first cooking device for cooking food from the user terminal device.

The processor 230 may identify whether the user has the first cooking device based on a list of cooking devices that the user has in case of receiving the signal.

The processor 230 may transmit a control instruction for performing a second cooking operation capable of replacing the first cooking operation of the first cooking device to the SmartThings server 140 or a second cooking device through the communication interface 210 in case of identifying that the user does not have the first cooking device. However, the processor 230 is not limited thereto, and may transmit a signal for providing the information on the cooking method to the user to the user terminal device.

The processor 230 may transmit a control instruction for controlling the first cooking device to the SmartThings server 140 or the first cooking device in case of identifying that the user has the first cooking device through the communication interface 210.

The description describes a controlling method of an electronic apparatus 200 by the above-described processor 230 in detail with reference to FGS. 3 to 7.

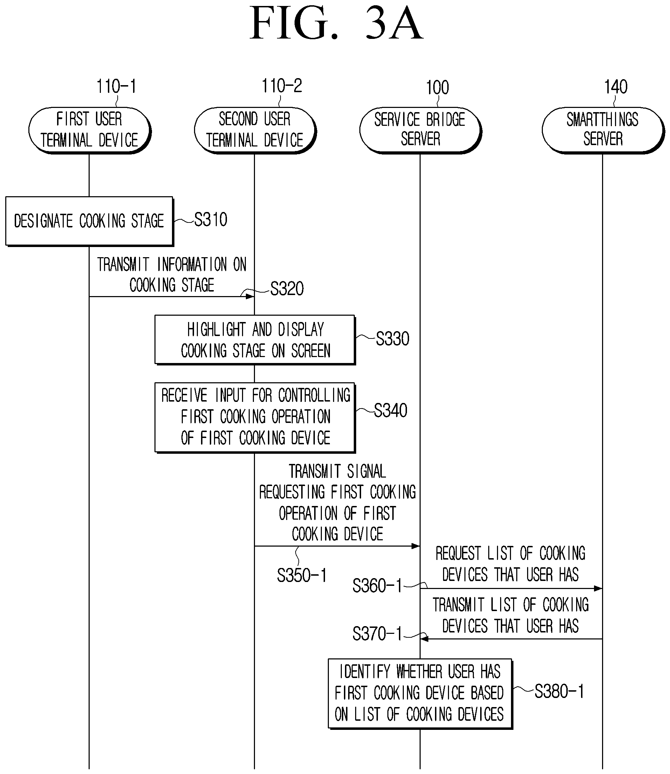

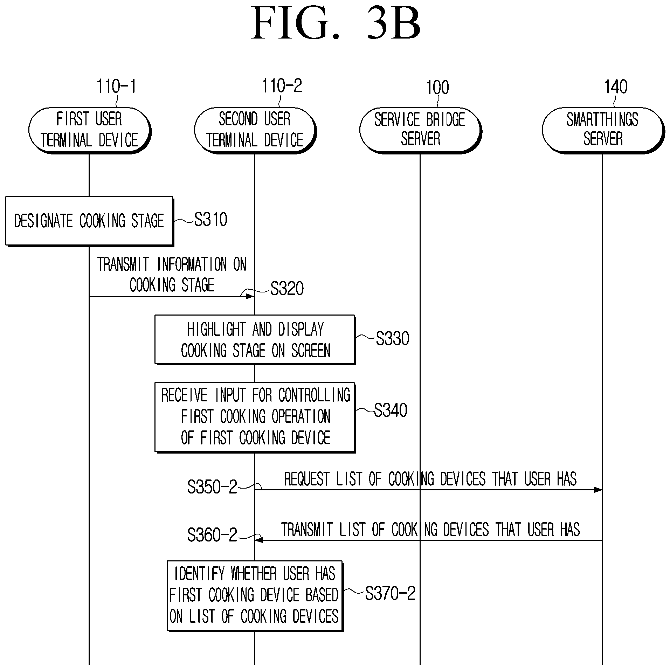

FIGS. 3 to 5 are views for explaining in detail a system including an electronic apparatus 200 that provides an online cooking class through video call and remote device-control technology according to the disclosure.

FIG. 3A is a sequence diagram for explaining an operation of the electronic apparatus 200 identifying whether a user has a cooking device according to other embodiments of the disclosure.

Referring to FIG. 3A, it may be designated which cooking stage a current food cooking stage is through a first user terminal device 110-1 of an instructor conducting an online class (S310).

The first user terminal device 110-1 may transmit information on the cooking stage designated by a user input to a second user terminal device 110-2 of a participant taking the online class (S320). First user terminal device 110-1 may transmit the information on the cooking stage to second user terminal device 110-2 by performing a peer-to-peer communication connection through a communication interface 210. In addition, the first user terminal device 110-1 may transmit the information on the cooking stage to a video call server 120 built based on web real-time communication (WebRTC) through the communication interface 210, and the second user terminal device 110-2 may receive the information on the cooking stage from the video call server 120 built based on the WebRTC through the communication interface.

The second user terminal device 110-2 may display a user interface (UI) indicating each cooking stage required for cooking food on a display. In case of receiving the information on the cooking stage from the first user terminal device 110-1, the second user terminal device 110-2 may highlight and display a UIindicating a cooking stage corresponding to the received information on the cooking stage on the display (S330).

The cooking stage may be highlighted by highlighting a border of the UI indicating the information on the cooking stage. However, the disclosed embodiments are not limited thereto, and the UI indicating the cooking stage on the display may be highlighted in various ways for some areas of the UI to be highlighted and displayed to be distinguished from the other areas.

However, the second user terminal device 110-2 is not limited thereto, and may include, for example, a speaker, and/or a vibration output module. In case of receiving the information on the cooking stage from the first user terminal device 110-1, the second user terminal device 110-2 may control the speaker to output the received information or notification on the cooking stage in the form of audio, or control the vibration output module to output the received information or notification on the cooking stage in the form of vibration.

The second user terminal device 110-2 may receive the user input for controlling a first cooking operation of a first cooking device through a UI displayed on the display (S340).

For example, the second user terminal device 110-2 may receive the user input for controlling a "10 minute roasting" operation of an "oven" through the UI displayed on the display.

However, the second user terminal device 110-2 is not limited thereto, and may receive the user input through various user interfaces such as a button, a lever, and a touch-type button.

The second user terminal device 110-2 may transmit a signal requesting the first cooking operation of the first cooking device to a service bridge server 100 (S350-1).

The service bridge server 100 may receive the signal requesting the first cooking operation of the first cooking device by performing the communication connection with the second user terminal device 110-2 through the communication interface 210 (S350-1).

In case of receiving the signal requesting the first cooking operation of the first cooking device, the service bridge server 100 may request a list of cooking devices that the user has by performing the communication connection with a SmartThings server 140 through the communication interface 210 (S360-1). The service bridge server 100 may receive the list of cooking devices that the user has by performing the communication connection with the SmartThings server 140 through the communication interface 210 (S370-1).

However, the disclosed embodiments are not limited thereto, and the list of cooking devices that the user has may be pre-stored in a memory 220 of the service bridge server 100.

The service bridge server 100 may identify whether the user has the first cooking device based on the received list of cooking devices (S380-1). For example, the service bridge server 100 may identify whether the "oven" is included in the list of cooking devices that the user has.

However, the service bridge server 100 is not limited thereto, and may be implemented as an integrated server including the SmartThings server 140.

FIG. 3B is a sequence diagram for explaining the operation of identifying whether the user has the cooking device in case that the user terminal device may directly access the SmartThings server 140 according to other embodiments of the disclosure.

Referring to FIG. 3B, the description above describes the operation of receiving the user input for designating the cooking stage by the first user terminal device through the processes (S310, S320, S330, and S340) of receiving the input for controlling the first cooking operation of the first cooking device by the second user terminal device 110-2 together with FIG. 3A.

The second user terminal device 110-2 may request the list of cooking devices that the user has from the SmartThings server 140 (S350-2).

The SmartThings server 140 may transmit the list of cooking devices that the user has to the second user terminal device 110-2 in response to the request from the second user terminal device 110-2. The second user terminal device 110-2 may receive the list of cooking devices that the user has from the SmartThings server 140 (S360-2).

The second user terminal device 110-2 may identify whether the user has the first cooking device based on the received list of the cooking devices (S370-2).

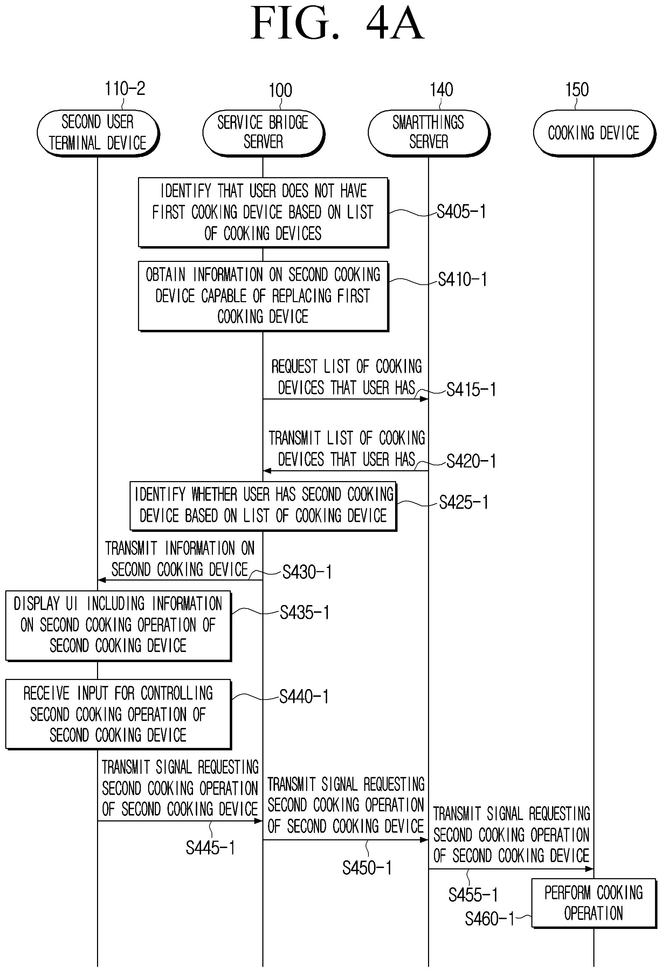

FIG. 4A is a sequence diagram for explaining a process in which the cooking operation is performed by the electronic apparatus 200 identifying whether the user has the cooking device and then transmitting an instruction for controlling the cooking device to the cooking device according to other embodiments of the disclosure.

Referring to FIG. 4A, the service bridge server 100 may identify whether the user has the first cooking device based on the list of cooking devices that the user has. The service bridge server 100 may identify that the user does not have the first cooking device in case that the first cooking device is not included in the list of cooking devices (S405-1).

For example, in case that the "oven" is not included in the list of cooking devices that the user has, the service bridge server 100 may identify that the user does not have the "oven."

The service bridge server 100 may obtain information on a second cooking device capable of replacing the first cooking device (S410-1). The service bridge server 100 may obtain the information on the second cooking device which may perform a cooking operation that produces substantially the same cooking effect as the cooking operation performed by the first cooking device based on the information on the cooking operation of the first cooking device such as the information on the first cooking device or a cooking operation type of the first cooking device, or time required for the cooking operation.

For example, the first cooking device may be the "oven" and the first cooking operation may be the "10 minute roasting in the oven." In this case, the service bridge server 100 may identify a cooking operation of "5 minute cooking in an air fryer" that produces substantially the same cooking effect based on information on the "oven" and information on the "10 minute roasting in the oven," and identify the second cooking device as the air fryer.

The service bridge server 100 may request the list of cooking devices that the user has by performing the communication connection with the SmartThings server 140 through the communication interface 210 (S415-1). The processor 230 may receive the list of cooking devices that the user has by performing the communication connection with the SmartThings server 140 through the communication interface 210 (S420-1). However, the disclosed embodiments are not limited thereto, and the list of cooking devices that the user has may be pre-stored in the memory 220 of the service bridge server 100.

The service bridge server 100 may identify whether the user has the second cooking device based on the received list of cooking devices (S425-1). For example, the service bridge server 100 may identify whether the "air fryer" is included in the list of cooking devices that the user has.

In case of identifying that the user has the second cooking device, the service bridge server 100 may transmit the information on the second cooking device to the second user terminal device 110-2 by performing the communication connection with the second user terminal device 110-2 through the communication interface 210 (S430-1).

The information on the second cooking device transmitted to the second user terminal device 110-2 may be displayed in the form of a UI on the display of the second user terminal device 110-2 (S435-1).

The second user terminal device 110-2 may receive the user input for controlling a second cooking operation of the second cooking device through the displayed UI (S440-1).

For example, the second user terminal device 110-2 may receive the user input for controlling the "5 minute cooking" operation of the "air fryer."

However, the second user terminal device 110-2 is not limited thereto, and may receive the user input for controlling the second cooking operation of the second cooking device through a touch-type user interface or a button-type user interface.

The second user terminal device 110-2 may transmit a signal requesting the second cooking operation of the second cooking device to the service bridge server 100 (S445-1). The service bridge server 100 may receive the signal requesting the second cooking operation of the second cooking device by performing the communication connection with the second user terminal device 110-2 through the communication interface 210.

The service bridge server 100 may transmit the signal requesting the second cooking operation of the second cooking device to the SmartThings server 140 by performing the communication connection with the SmartThings server 140 through the communication interface 210 (S450-1). The signal requesting the second cooking operation of the second cooking device may be transmitted from the smart device to the cooking device (S455-1).

For example, a signal requesting the operation of "5 minute cooking" of the "air fryer" may be transmitted to the cooking device. However, the service bridge server 100 is not limited thereto, and may directly transmit the signal requesting the second cooking operation of the second cooking device by performing the communication connection with the cooking device through the communication interface 210.

The cooking device 150 may perform the second cooking operation based on the signal requesting the second cooking operation of the second cooking device (S460-1).

For example, the "air fryer" may perform the operation of "5 minute cooking."

However, the service bridge server 100 is not limited to the above-described embodiments, and may be implemented as one integrated server together with a recipe server 130 or the SmartThings server 140. In addition, the second user terminal device 110-2 may directly transmit the signal requesting the second cooking operation of the second cooking device to the second cooking device.

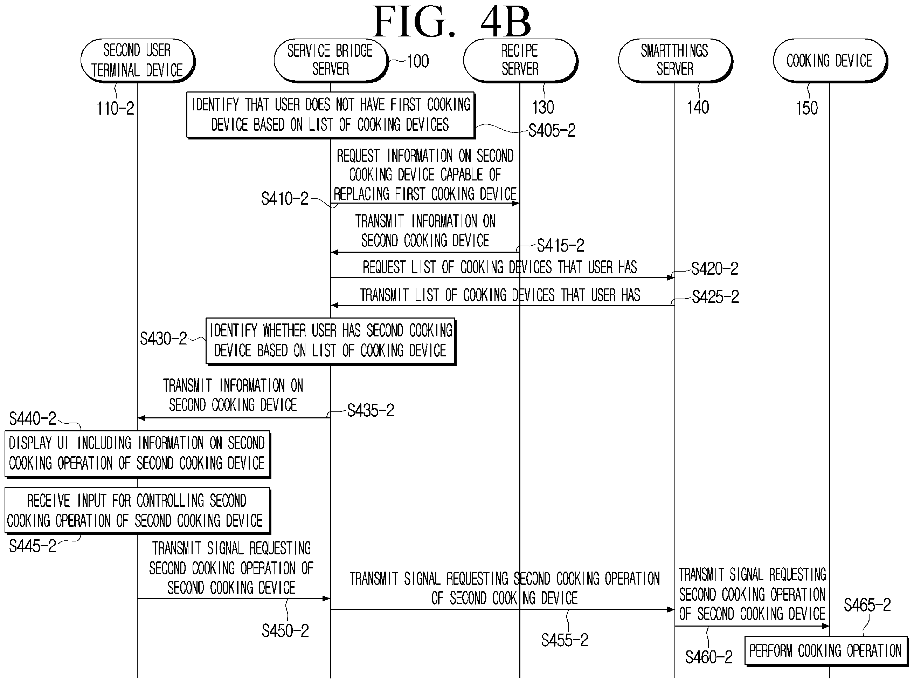

FIG. 4B is a sequence diagram for explaining a process in which the cooking operation is performed by the electronic apparatus 200 identifying whether the user has the cooking device and then transmitting the instruction for controlling the cooking device to the cooking device according to other embodiments of the disclosure.

Referring to FIG. 4B, the service bridge server 100 may identify whether the user has the first cooking device based on the list of cooking devices that the user has. The service bridge server 100 may identify that the user does not have the first cooking device in case that the first cooking device is not included in the list of cooking devices (S405-2).

In case of identifying that the user does not have the first cooking device, the service bridge server 100 may request information on the cooking method capable of replacing the cooking operation of the first cooking device or the information on the second cooking device capable of replacing the first cooking device by performing the communication connection with the recipe server 130 through the communication interface 210 (S410-2).

The service bridge server 100 may receive the information on the cooking method capable of replacing the cooking operation of the first cooking device or the information on the second cooking device capable of replacing the first cooking device from the recipe server 130 by performing the communication connection with the recipe server 130 through the communication interface 210 (S415-2).

However, the disclosed embodiments are not limited thereto, and the service bridge server 100 and the recipe server 130 may be implemented as one integrated server.

For example, the cooking stage may be a heating process or roasting, and the first cooking device may be the "oven." In this case, service bridge server 100 may receive the information on the cooking method (e.g., roasting in a frying pan) or the information on the cooking device (e.g., the air fryer) by requesting the recipe server 130 for the information on the cooking method capable of replacing the "roasting" operation of the "oven" or the information on the cooking device capable of replacing the "oven."

The service bridge server 100 may request the list of cooking devices that the user has by performing the communication connection with the SmartThings server 140 through the communication interface 210 (S420-2). The service bridge server 100 may request the list of cooking devices that the user has by performing the communication connection with the SmartThings server 140 through the communication interface 210 (S420-2).

The service bridge server 100 may identify whether the user has the second cooking device based on the list of cooking devices (S430-2). In case of identifying that the user has the second cooking device, the service bridge server 100 may transmit the information on the second cooking device by performing the communication connection with the second user terminal device 110-2 through the communication interface 210 (S435-2).

For example, the service bridge server 100 may identify whether the "air fryer" is included in the list of cooking devices that the user has. In case of identifying that the user has the "air fryer," the service bridge server 100 may transmit information on the "air fryer" to the second user terminal device 110-2.

The second user terminal device 110-2 may display a UI including the information on the second cooking operation of the second cooking device on the display of the second user terminal device 110-2 in case that the information on the second cooking operation of the second cooking device is transmitted to the second user terminal device 110-2 (S440-2).

For example, a UIincluding information on the operation of "5 minute cooking" of the "air fryer" may be displayed on the display of the second user terminal device 110-2.

The second user terminal device 110-2 may receive the input for controlling the second cooking operation of the second cooking device through the UI on the display (S445-2).

However, the second user terminal device 110-2 is not limited thereto, and may receive the user input for controlling the second cooking operation of the second cooking device through the touch-type user interface or the button-type user interface.

The second user terminal device 110-2 may transmit the signal requesting the second cooking operation of the second cooking device to the service bridge server 100 in case of receiving the input for controlling the second cooking operation of the second cooking device (S450-2).

For example, the input for controlling the operation of "5 minute cooking" of the "air fryer" may be received through the UI displayed on the user terminal device. In case of receiving the input, the second user terminal device 110-2 may transmit the signal requesting the operation of "5 minute cooking" of the "air fryer" to the service bridge server 100.

The service bridge server 100 may transmit the signal requesting the second cooking operation of the second cooking device to the SmartThings server 140 by performing the communication connection with the SmartThings server 140 through the communication interface 210 in case of receiving the signal requesting the second cooking operation of the second cooking device (S455-2). The signal requesting the second cooking operation of the second cooking device may then be transmitted from the SmartThings server 140 to the second cooking device (S460-2). The second cooking device may perform the second cooking operation in case of receiving the signal requesting the second cooking operation of the second cooking device (S465-2).

For example, the service bridge server 100 may transmit the signal requesting the operation of "5 minute cooking" of the "air fryer" to the SmartThings server 140 in case of receiving the signal requesting the operation of "5 minute cooking" of the "air fryer." The signal requesting the operation of "5 minute cooking" of the "air fryer" may then be transmitted from the SmartThings server 140 to the "air fryer," and the "air fryer" may perform the operation of "5 minute cooking."

However, the service bridge server 100 is not limited to the above-described embodiments, and may be implemented as one integrated server together with the recipe server 130 or the SmartThings server 140. In addition, the second user terminal device 110-2 may directly transmit the signal requesting the second cooking operation of the second cooking device to the second cooking device.

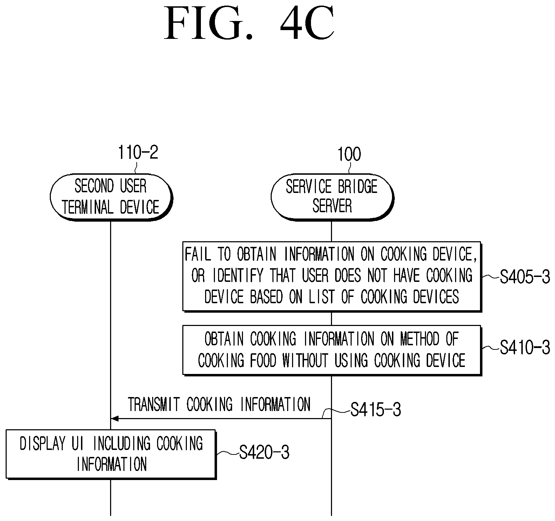

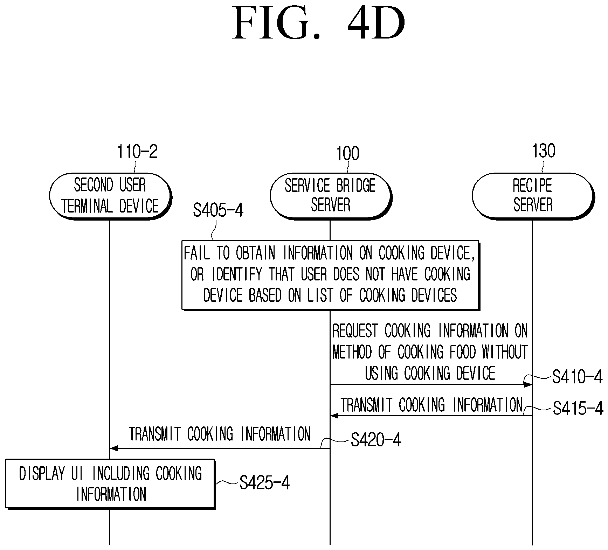

FIGS. 4C and 4D are sequence diagrams for explaining an operation of the electronic apparatus 200 transmitting and displaying cooking information to the user terminal device according to other embodiments of the disclosure.

Referring to FIG. 4C, the service bridge server 100 may fail to obtain the information on the cooking device, or identify that the user does not have the cooking device based on the list of cooking devices that the user has (S405-3). In detail, the service bridge server 100 may identify that the user does not have the first cooking device based on the list of cooking devices that the user has. In addition, the service bridge server 100 may fail to obtain the information on the second cooking device capable of replacing the first cooking device, or identify that the user does not have the second cooking device based on the list of cooking devices that the user has.

For example, the service bridge server 100 may identify that the user does not have the "oven" based on the list of cooking devices that the user has. In addition, the service bridge server 100 may fail to obtain the information on the "air fryer" capable of replacing the "oven," or identify that the user does not have the "air fryer" based on the list of cooking devices that the user has.

The service bridge server 100 may obtain the cooking information on a method of cooking food without using the corresponding cooking device in case of failing to obtain the information on the cooking device or identifying that the user does not have the cooking device based on the list of cooking devices (S410-3).

Referring to FIG. 4D, the service bridge server 100 may request the cooking information on the method of cooking food without using the corresponding cooking device by performing the communication connection with the recipe server 130 through the communication interface 210 (S410-4). The service bridge server 100 may then receive the cooking information on the method of cooking food without using the corresponding cooking device by performing the communication connection with the recipe server 130 through the communication interface 210 (S415-4).

For example, the service bridge server 100 may obtain the information on the cooking method such as "roasting in the frying pan," where food may be cooked without using the "oven" in case of identifying that the user does not have the "oven" based on the list of cooking devices the user has. In addition, the service bridge server 100 may obtain the information on the cooking method such as "roasting in the frying pan," where food may be cooked without using the "air fryer" in case of failing to obtain the information on the "air fryer" capable of replacing the "oven", or identifying that the user does not have the "air fryer" based on the list of cooking devices the user has.

In addition, the service bridge server 100 may request the cooking information for cooking food without using the "oven" or the "air fryer," and receive the information on the cooking method such as "roasting in the frying pan" from the recipe server 130.

The service bridge server 100 may transmit the cooking information received from the recipe server 130 to the second user terminal device 110-2 by performing the communication connection with the second user terminal device 110-2 through the communication interface 210 (S415-3). The second user terminal device 110-2 may display a UI including the cooking information on the display in case that the cooking information is transmitted to the second user terminal device 110-2 (S420-3).

For example, the second user terminal device 110-2 may receive the information on the cooking method such as "roasting in the frying pan." In this case, the second user terminal device 110-2 may display the UI including the information on the cooking method such as "roasting in the frying pan" on the display.

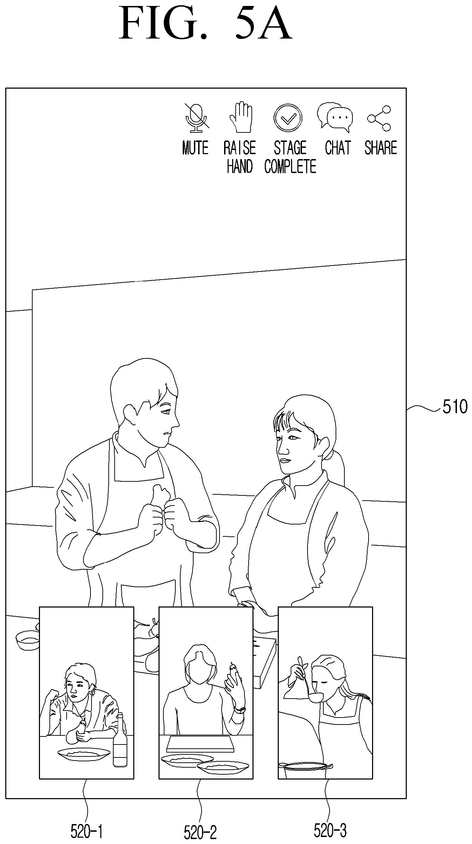

The description describes the image and UI, displayed on the display of the user terminal device in the system providing the online cooking class through the video call and remote device-control technology with reference to FIGS. 5A to 5D.

FIG. 5A is a view for explaining a screen of the online cooking class conducted through the video call that uses the user terminal device according to other embodiments of the disclosure.

Referring to FIG. 5A, an image 510 in which the instructor shows a cooking demonstration and conducts the class may be displayed on a main screen of the display of the user terminal device. The image 510 in which the instructor shows the cooking demonstration and conducts the class may be displayed on the display of the user terminal device through a real-time video call, or may be an image of a pre-recorded video call displayed on the display of the user terminal device.

Images 520-1, 520-2, and 520-3 showing images of other participants taking the cooking class by the video call may be displayed on some areas of the display of the user terminal device. The areas where the images 520-1, 520-2, and 520-3 showing the images of other participants taking the cooking class by the video call that are displayed on the display of the user terminal device may be positioned at a lower end of the image 510 which is the main screen and in which the instructor shows the cooking demonstration and conducts the class, which is not limited thereto, and may be positioned in various display areas.

The images 520-1, 520-2, and 520-3 showing the appearances of other participants taking the cooking class by the video call may depend on the number of participants in the cooking class, and may not be disposed on the display of the user terminal device in case that there are no other participants.

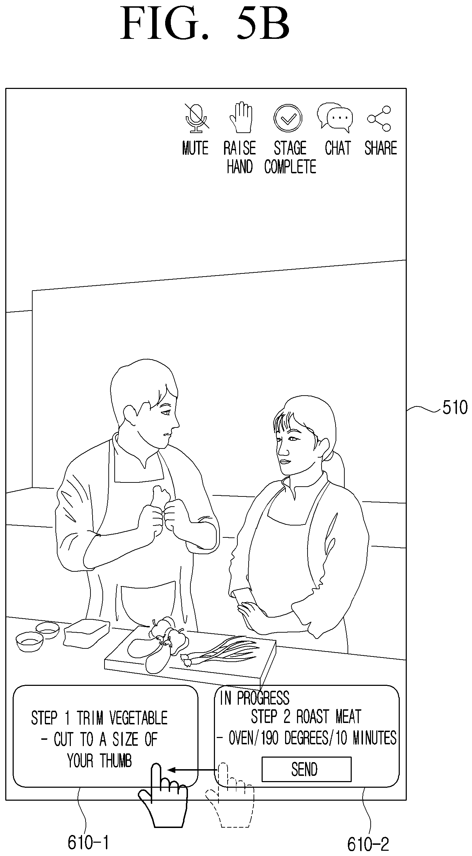

FIG. 5B is a view for explaining the user interface (UI) for controlling the cooking device displayed on the screen of the user terminal device according to other embodiments of the disclosure.

Referring to FIG. 5B, a UI 610-1 or 610-2 including information on each stage of cooking food may also be displayed in a partial area of the display of the user terminal device while the image 510 in which the instructor shows the cooking demonstration and conducts the class is displayed on the main screen of the display of the user terminal device. The information on each stage of cooking food may include a title of each cooking stage and information on a specific cooking operation in each cooking stage. In addition, the UI 610-1 or 610-2 including the information on each stage of cooking food may be displayed together with a UI for receiving the input for controlling the cooking operation of the cooking device used in each cooking stage. The user input for receiving a request for controlling the cooking operation of the cooking device may be received through the UI displayed on the display of the second user terminal device 110-2.

For example, the UI 610-1 for a first cooking stage may include a cooking stage title of "trim vegetable" and information on a specific cooking operation of "cut to a size of your thumb." The UI 610-2 for a second cooking stage may include a cooking stage title of "roast meat" and information on a specific cooking operation of "oven/190 degrees/10 minutes." In addition, the UI 610-2 for the second cooking stage may also display a UI for receiving the input for controlling "the operation of roasting meat in the oven at 190 degrees for 10 minutes." The user input for receiving a request for controlling "the operation of roasting meat in the oven at 190 degrees for 10 minutes" for "the oven" may be received through the UI displayed on the display of the second user terminal device 110-2.

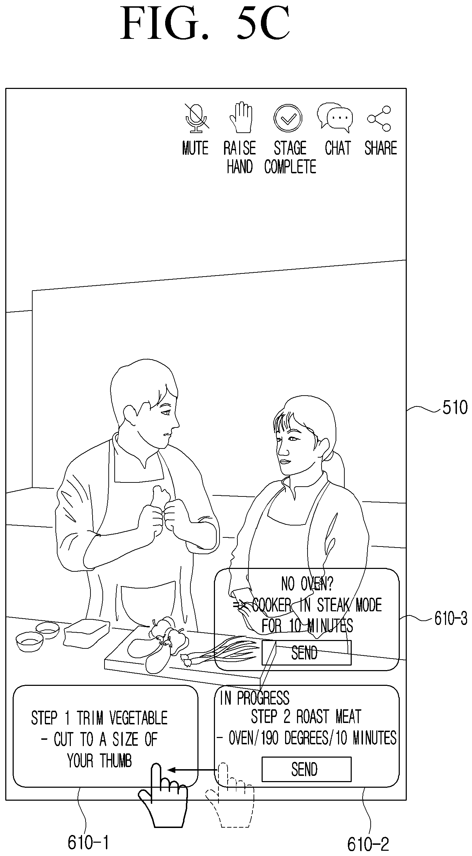

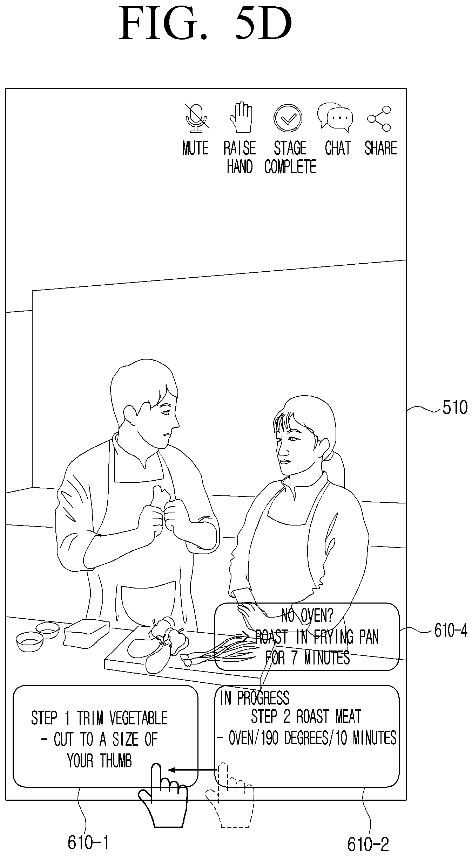

FIGS. 5C and 5D are views for explaining the UI for controlling the cooking device displayed on the screen of the user terminal device according to other embodiments of the disclosure.

Referring to FIG. 5C, in case that the user is identifying as not having the first cooking device used in the cooking stage designed by the instructor conducting the cooking class through the first user terminal device 110-1, a UI 610-3 including the information on the second cooking device capable of replacing the first cooking device and the information on the second cooking operation performed by the second cooking device. A UI for receiving the input for controlling the second cooking operation of the second cooking device may be displayed together.

For example, a "meat roasting stage" may be the cooking stage designed by the instructor through the first user terminal device 110-1. In case that it is identified by the service bridge server 100 that the user does not have the "oven" used in the "meat roasting stage," a UI including information on a "cooker" that may be used by replacing the "oven" and information on a cooking operation of using "the cooker in a steak mode for 10 minutes" may be displayed adjacent to a UI including information on a "meat roasting stage." In addition, the UI 610-3 including the information on the second cooking device that may be used by replacing the first cooking device and the information on the second cooking operation performed by the second cooking device may be displayed together with the UI for receiving the input for controlling the "operation of the cooker roasting meat in the steak mode for 10 minutes." The user input for receiving a request to control the "operation of the cooker roasting meat in the steak mode for 10 minutes" for the "cooker" may be received through the UI displayed on the display of the second user terminal device 110-2.

Referring to FIG. 5D, in case that the user is identifying as not having the first cooking device used in the cooking stage designed by the instructor conducting the cooking class through the first user terminal device 110-1, a UI 610-4 including the information on the cooking method that may be used by replacing the cooking operation performed by the first cooking device may be displayed adjacent to the UI 610-2 including the information on the cooking stage displayed in the partial area of the second user terminal device 110-2.

For example, the "meat roasting stage" may be the cooking stage designed by the instructor through the first user terminal device 110-1. In case that it is identified by the service bridge server 100 that the user does not have the "oven" used in the "meat roasting stage," a UI including the information on a cooking method of "roasting in the frying pan for 7 minutes" which may be used by replacing the "roasting operation of the oven" may be displayed.

As described above, the online cooking class may be conducted through the real-time video call or the remote device-control technology.

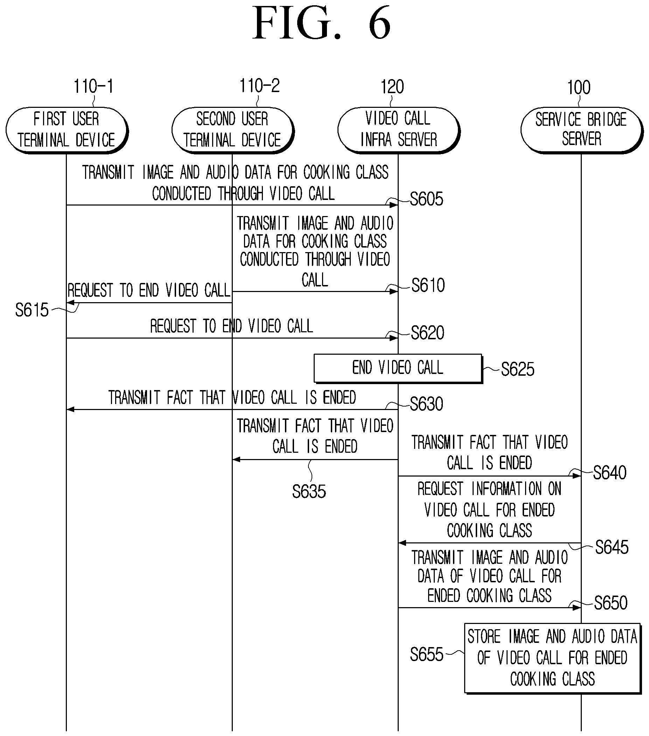

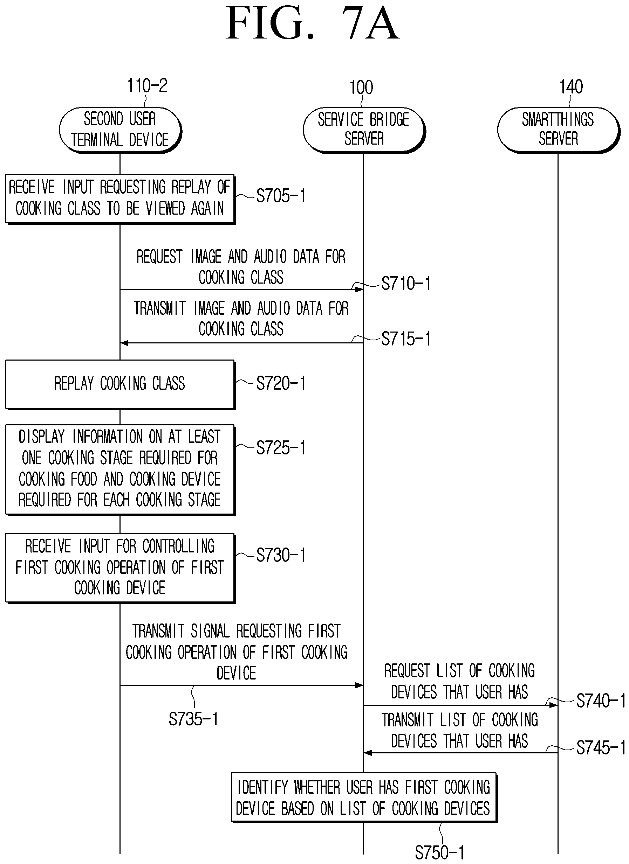

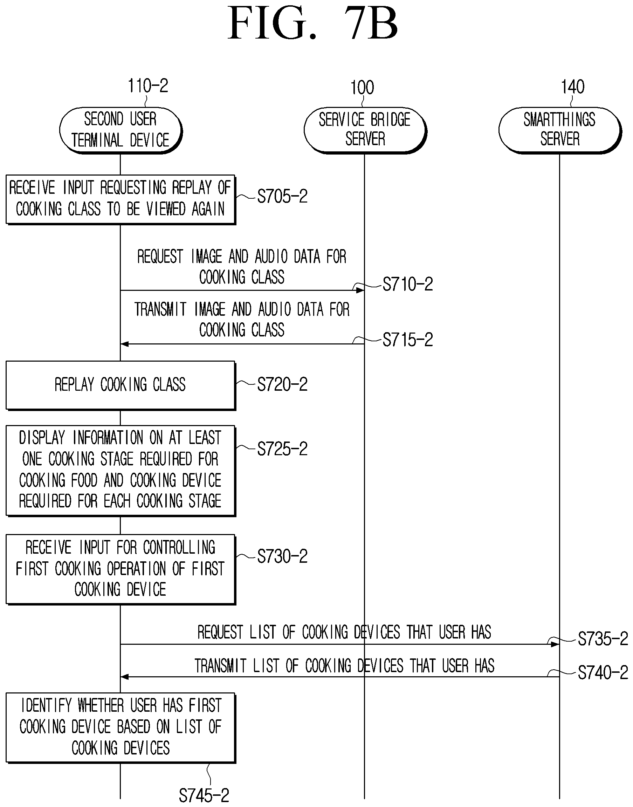

FIGS. 6 and 7 are views for explaining in detail a system providing replay of the online cooking class conducted through the ended video call and the remote device-control technology.

FIG. 6 is a sequence diagram for explaining an operation of the electronic apparatus 200 storing the image and audio data of the video call for the cooking class according to other embodiments of the disclosure.

The first user terminal device 110-1 may transmit the image and audio data of the instructor conducting the cooking class through the video call to the video call server (or video call infra server) 120 (S605).

The second user terminal device 110-2 may then transmit the image and audio data of the participant taking the cooking class conducted through the video call to the video call server 120 (S610). However, the first user terminal device 110-1 and the second user terminal device 110-2 are not limited thereto, and may transmit and store the image and audio data for the cooking class conducted through the video call to a user local device, and/or an external device.

However, the first user terminal device 110-1 and the second user terminal device 110-2 are not limited thereto, and may transmit the image and audio data for the cooking class conducted through the video call to the service bridge server 100 through the communication interface 210.

In case of ending the online cooking class, the second user terminal device 110-2 may transmit a request for ending the video call to the first user terminal device 110-1 (S615).

The first user terminal device 110-1 may transmit the request for ending the video call to the video call server 120 in case of receiving the request for ending the video call from the second user terminal device 110-2 (S620).

The video call server 120 may end the video call in case of receiving the request for ending the video call from the first user terminal device 110-1 (S625).

In case that the video call is ended, the video call server 120 may transmit information on the fact that the video call is ended to the first user terminal device 110-1, the second user terminal device 110-2, and the service bridge server 100 (S630, S635, and S640).

In case of receiving the fact that the video call is ended, the service bridge server 100 may request information on the video call for the ended cooking class by performing the communication connection with the video call server 120 through the communication interface 210 (S645). The service bridge server 100 may receive the information on the video call for the ended cooking class by performing the communication connection with the video call server 120 through the communication interface 210 (S650). However, the service bridge server 100 is not limited thereto, and may receive the information on the video call for the ended cooking class that is stored in the user local device or the external device by performing the communication connection with the user local device or the external device through the communication interface 210.

The information on the video call may include the image data, the audio data, and other shared data included in the video call. The image data may also include a food cooking image. The food cooking image may be provided though the video call between the plurality of users, and may include at least one cooking stage required for cooking food and the information on the cooking device required for each cooking stage.

In case of receiving the image data, audio data, and other shared data of the video call for the ended cooking class from the video call server 120, the service bridge server 100 may store the image data, the audio data, and other shared data in the memory 220 (S655).

FIGS. 7A and 7B are sequence diagrams for explaining a process in which the electronic apparatus 200 identifies whether the user has the cooking device in a process of replaying the cooking class based on the stored image and audio data of the video call according to other embodiments of the disclosure.

Referring to FIG. 7A, the second user terminal device 110-2 may receive the user input requesting replay of a cooking class to be viewed again (S705-1).

The service bridge server 100 may receive a signal requesting the image and audio data for the cooking class from the second user terminal device 110-2 by performing the communication connection with the second user terminal device 110-2 through the communication interface 210 (S710-1). In addition, the service bridge server 100 may receive, from the second user terminal device 110-2, the shared data such as chatting data and data for adjusting UI layout sync between the participants in the cooking class conducted through the video call in case that the cooking stage is switched by performing the communication connection with the second user terminal device 110-2 through communication interface 210.

In case of receiving the signal requesting the image and audio data for the cooking class, the service bridge server 100 may transmit the image and audio data for the cooking class stored in the second user terminal device 110-2 by performing the communication connection with the second user terminal device 110-2 through the communication interface 210 (S715-1).

In case of receiving the image and audio data for the cooking class from the service bridge server 100, the second user terminal device 110-2 may replay the image and audio for the cooking class (S720-1).

While the second user terminal device 110-2 replays the images and audio for the cooking class, the second user terminal device 110-2 may display a UI including the information on at least one cooking stage required for cooking food and the cooking device required for each cooking stage on a partial area of the display (S725-1).

The second user terminal device 110-2 may receive the user input for controlling the first cooking operation of the first cooking device used in a food cooking stage through the UI displayed on the display (S730-1).

However, the second user terminal device 110-2 is not limited thereto, and may receive the user input through a touch-type user interface or a button-type user interface.

In case that the user input for controlling the first cooking operation of the first cooking device is received, the signal requesting the first cooking operation of the first cooking device may be transmitted from the second user terminal device 110-2 to the service bridge server 100 (S735-1). In case of receiving the signal requesting the first cooking operation of the first cooking device, the service bridge server 100 may transmit a signal requesting a list of cooking devices that the user has to the SmartThings server 140 by performing the communication connection with the SmartThings server 140 through the communication interface 210 (S740-1).

Here, referring to FIG. 7B, the second user terminal device 110-2 may be connected to the SmartThings server 140. In this case, the signal requesting the list of cooking devices that the user has may be directly transmitted from the second user terminal device 110-2 to the SmartThings server 140 (S735-2), and the list of cooking devices that the user has may be directly transmitted from the SmartThings server 140 to the second user terminal device 110-2 (S740-2).

The service bridge server 100 may receive the list of cooking devices that the user has by performing the communication connection with the SmartThings server 140 through the communication interface 210 (S745-1).

The service bridge server 100 may identify whether the user has the first cooking device based on the list of cooking devices that the user has (S750-1).

Subsequent operations of the processor 230 are the same as those described above with reference to FIGS. 4 and 5.

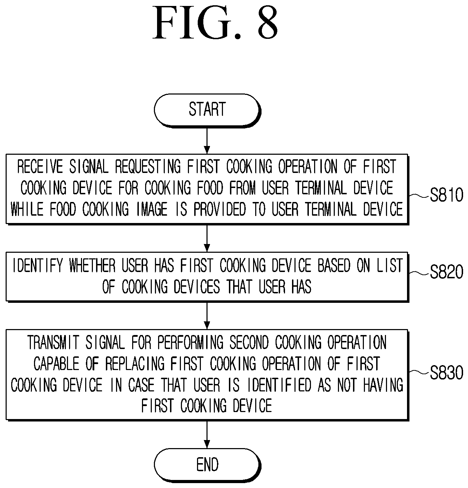

FIG. 8 is a flowchart for explaining an operation of the electronic apparatus 200 according to other embodiments of the disclosure.

The electronic apparatus 200 may receive the signal requesting the first cooking operation of the first cooking device for cooking food from the user terminal device while the food cooking image is provided to the user terminal device (S810).

The electronic apparatus 200 may identify whether the user has the first cooking device based on the list of cooking devices that the user has in case of receiving the signal (S820).

The electronic apparatus 200 may transmit a signal for performing the second cooking operation capable of replacing the first cooking operation of the first cooking device to the external device in case of identifying that the user does not have the first cooking device (S830). On the other hand, the electronic apparatus 200 may transmit the control instruction for controlling the first cooking device to the first cooking device in case of identifying that the user has the first cooking device.

In detail, the electronic apparatus 200 may transmit the cooking information on the method of cooking food without using the first cooking device to the user terminal device in case of identifying that the user does not have the first cooking device.

In addition, the electronic apparatus 200 may obtain the information on the second cooking device capable of performing the second cooking operation capable of replacing the first cooking operation of the first cooking device based on the information on the first cooking device and first cooking operation in case of identifying that the user does not have the first cooking device.

The electronic apparatus 200 may identify whether the user has the second cooking device based on the list of cooking devices in case of obtaining the information on the second cooking device.

The electronic apparatus 200 may transmit the control instruction for controlling the second cooking device to the second cooking device in case of identifying that the user has the second cooking device.

The electronic apparatus 200 may receive the user input on whether to control the second cooking device in case of identifying that the user has the second cooking device.

In case of receiving the user input, the electronic apparatus 200 may transmit the control instruction for controlling the second cooking device to the second cooking device.

The electronic apparatus 200 may transmit the information on the second cooking device and second cooking operation to the user terminal device to provide the information on the second cooking device and second cooking operation to the user terminal device.

The electronic apparatus 200 may transmit the cooking information on the method of cooking food without using the first cooking device to the user terminal device in case of failing to obtain the information on the second cooking device or identifying that the user does not have the second cooking device.

The method may be included and provided in a computer program product. The computer program product may be traded as a product between a seller and a purchaser. The computer program product may be distributed in the form of a storage medium (for example, a compact disc read only memory (CD-ROM)) that may be read by a machine, or may be distributed online (for example, downloaded or uploaded) through an application store (for example, PlayStore^{™}) or directly between two user devices (for example, smartphones). In case of the online distribution, at least a part of the computer program product (e.g., downloadable app) may be at least temporarily stored or temporarily provided in the machine-readable storage medium such as a server memory of a manufacturer, a server memory of an application store, or a relay server memory.

Although the embodiments are shown and described hereinabove, the disclosed embodiments are not limited to the above-mentioned specific embodiments, and may be variously modified by those skilled in the art to which the disclosed embodiments pertain without departing from the scope and spirit of the disclosed embodiments as disclosed in the accompanying claims. These modifications also need to be understood to fall within the scope of the disclosed embodiments.

## Claims

1. An electronic apparatus comprising:
a communication interface configured to perform a communication connection with an external device;
a memory storing at least one instruction; and
at least one processor connected to the memory and configured to execute the at least one instruction,
wherein the at least one instruction includes instructions to:
receive a signal requesting a first cooking operation of a first cooking device for cooking food from a user terminal device while a food cooking image is provided to the user terminal device,
in response to receiving the signal requesting the first cooking operation, identify whether a user has the first cooking device based on a list of cooking devices that the user has, and
in response to identifying that the user does not have the first cooking device, transmit to the external device a signal for performing a second cooking operation that is capable of replacing the first cooking operation of the first cooking device.

2. The apparatus as claimed in claim 1, wherein the at least one instruction further includes instructions to, in response to identifying that the user does have the first cooking device, transmit to the first cooking device a control instruction for controlling the first cooking device.

3. The apparatus as claimed in claim 1, wherein the at least one instruction further includes instructions to, in response to identifying that the user does not have the first cooking device, transmit to the user terminal device cooking information on a method of cooking food without using the first cooking device.

4. The apparatus as claimed in claim 1, wherein the at least one instruction further includes to:
in response to identifying that the user does not have the first cooking device, attempt to obtain information on a second cooking device capable of performing the second cooking operation that is capable of replacing the first cooking operation of the first cooking device based on information on the first cooking device and information on the first cooking operation,
in response to obtaining the information on the second cooking device, identify whether the user has the second cooking device based on the list of cooking devices that the user has, and
in response to identifying that the user does have the second cooking device, transmit to the second cooking device a control instruction for controlling the second cooking device.

5. The apparatus as claimed in claim 1, wherein the at least one instruction further includes instructions to:
in response to identifying that the user does not have the first cooking device, obtain information on a second cooking device capable of performing the second cooking operation that is capable of replacing the first cooking operation of the first cooking device based on information on the first cooking device and information on the first cooking operation,
in response to obtaining the information on the second cooking device, identify whether the user has the second cooking device based on the list of cooking devices that the user has,
in response to identifying that the user does have the second cooking device, receive a user input on whether to control the second cooking device, and
in response to receiving the user input to control the second cooking device, transmit to the second cooking device a control instruction for controlling the second cooking device.

6. The apparatus as claimed in claim 4, wherein the at least one instruction further includes instructions to transmit the information on the second cooking device and information on the second cooking operation to the user terminal device to provide the information on the second cooking device and the information on the second cooking operation to the user.

7. The apparatus as claimed in claim 4, wherein the at least one instruction further includes instructions to, in response to (i) identifying that the user does not have the second cooking device or (ii) failing to obtain the information on the second cooking device, transmit to the user terminal device cooking information on a method of cooking food without using the first cooking device.

8. The apparatus as claimed in claim 1, wherein the at least one instruction further includes instructions to:
receive a request for the food cooking image from the user terminal device, and
in response to receiving the request for the food cooking image, transmit data for the food cooking image to the user terminal device to provide the food cooking image to the user.

9. The apparatus as claimed in claim 1,
wherein the food cooking image is provided through a video call between a plurality of users that includes the user, and
wherein the food cooking image includes at least one cooking stage for cooking food and information on a cooking device for each of the at least one cooking stage.

10. A controlling method of an electronic apparatus, the method comprising:
receiving a signal requesting a first cooking operation of a first cooking device for cooking food from a user terminal device while a food cooking image is provided to the user terminal device;
in response to receiving the signal requesting the first cooking operation, identifying whether a user has the first cooking device based on a list of cooking devices that the user has; and
in response to identifying that the user does not have the first cooking device, transmitting to an external device a signal for performing a second cooking operation that is capable of replacing the first cooking operation of the first cooking device.

11. The method as claimed in claim 10, wherein the transmitting the signal includes, in response to identifying that the user does have the first cooking device, transmitting to the first cooking a control instruction for controlling the first cooking device.

12. The method as claimed in claim 10, wherein the transmitting the signal includes, in response to identifying that the user does not have the first cooking device, transmitting to the user terminal device cooking information on a method of cooking food without using the first cooking device.

13. The method as claimed in claim 10, wherein the transmitting the signal includes:
in response to identifying that the user does not have the first cooking device, attempting to obtain information on a second cooking device capable of performing the second cooking operation that is capable of replacing the first cooking operation of the first cooking device based on information on the first cooking device and information on the first cooking operation;
in response to obtaining the information on the second cooking device, identifying whether the user has the second cooking device based on the list of cooking devices that the user has; and
in response to identifying that the user does have the second cooking device, transmitting to the second cooking device a control instruction for controlling the second cooking device to the second cooking device.

14. The method as claimed in claim 10, wherein the transmitting the signal includes:
in response to identifying that the user does not have the first cooking device, attempting to obtain information on a second cooking device capable of performing the second cooking operation that is capable of replacing the first cooking operation of the first cooking device based on information on the first cooking device and information on the first cooking operation;
in response to obtaining the information on the second cooking device, identifying whether the user has the second cooking device based on the list of cooking devices that the user has;
in response to identifying that the user does have the second cooking device, receiving a user input on whether to control the second cooking device; and
in response to receiving the user input to control the second cooking device, transmitting to the second cooking device a control instruction for controlling the second cooking device.

15. The method as claimed in claim 13, further comprising transmitting the information on the second cooking device and information on the second cooking operation to the user terminal device to provide the information on the second cooking device and the information on the second cooking operation to the user.
